**Europäisches Patentamt**

**European Patent Office**

**Office européen des brevets**

(19)

(11) Numéro de publication : **0 344 028 B1**

# FASCICULE DE BREVET EUROPEEN

(12)

(45) Date de publication du fascicule du brevet :
**12.08.92 Bulletin 92/33**

(51) Int. Cl.$^5$ : **B23P 19/06**

(21) Numéro de dépôt : **89401145.1**

(22) Date de dépôt : **21.04.89**

(54) **Dispositif et procédé de vissage et de dévissage d'un écrou sur un élément de liaison.**

(30) Priorité : **25.05.88 FR 8806953**

(43) Date de publication de la demande :
**29.11.89 Bulletin 89/48**

(45) Mention de la délivrance du brevet :
**12.08.92 Bulletin 92/33**

(84) Etats contractants désignés :
**AT BE CH DE ES GB IT LI NL SE**

(56) Documents cités :
**EP-A- 232 018**
**EP-A- 0 012 101**
**DE-A- 3 711 544**
**FR-A- 2 352 631**
**GB-A- 1 467 230**

(73) Titulaire : **FRAMATOME**
**Tour Fiat 1, Place de la Coupole**
**F-92400 Courbevoie (FR)**

(72) Inventeur : **Frizot, Alain**
**15 Chemin Bas du Moulin**
**F-71710 Montcenis (FR)**

(74) Mandataire : **Lanceplaine, Jean-Claude et al**
**CABINET LAVOIX 2, Place d'Estienne d'Orves**
**F-75441 Paris Cédex 09 (FR)**

**Description**

La présente invention a pour objet un dispositif et un procédé de vissage et de dévissage sur un élément de liaison d'au moins deux écrous disposés sur un même axe.

Dans les installations industrielles mettant en oeuvre des éléments de liaison vissés, on effectue généralement une traction sur lesdits éléments par l'intermédiaire d'un dispositif de tension, en vue de les maintenir en état de précontrainte et, pendant cette traction, on visse ou on dévisse un écrou de maintien en position de l'élément de liaison.

C'est notamment le cas pour les récipients sous pression utilisés par exemple dans l'industrie, notamment nucléaire, chimique ou pétrochimique, où il est nécessaire de visser ou de dévisser un écrou de serrage et de maintien sur chaque élément de liaison constitué par exemple par un goujon, tout en exerçant une traction à l'aide d'un dispositif approprié sur l'ensemble de ces éléments de liaison par l'intermédiaire d'un écrou tendeur également vissé sur chaque élément de liaison. Un tel dispositif est décrit par exemple dans le document GB-A-1467230.

C'est également le cas dans l'industrie automobile et aéronautique où on utilise de nombreux éléments de liaison vissé.

Ces éléments de liaison sont généralement employés en assez grand nombre et relativement rapprochés les uns des autres, si bien qu'à chaque intervention, il est nécessaire de visser ou de dévisser d'une part l'écrou tendeur et d'autre part l'écrou de maintien sur chaque élément de liaison.

Ces opérations de vissage ou de dévissage successifs des différents écrous sont longues et délicates et elles ne peuvent être réalisées que de manière automatique.

Le but de la présente invention est donc de proposer un procédé et un dispositif de vissage et de dévissage automatique, sur un élément de liaison, d'écrous disposés en vis à vis suivant un axe vertical, facilitant les procédures d'exploitation, sans pour cela nuire à la sécurité intrinsèque de l'appareil et de son environnement.

L'invention a donc pour objet un dispositif de vissage et de dévissage d'un écrou sur un élément de liaison, caractérisé en ce qu'il comprend un bâti pivotant autour d'un axe parallèle à l'élément de liaison et supportant des moyens d'entraînement en rotation tangentiellement et successivement de chaque écrou à visser ou à dévisser et des moyens de déplacement desdits moyens d'entraînement en rotation suivant un axe parallèle à l'axe de l'élément de liaison et à une vitesse identique à celle de l'écrou en mouvement au cours de son vissage ou de son dévissage.

Selon une autre caractéristique de l'invention, le bâti pivote, sous l'action d'un organe de commande, entre une première position dans laquelle les moyens d'entraînement en rotation sont embrayés tangentiellement sur l'écrou à visser ou à dévisser et une seconde position dans laquelle lesdits moyens d'entraînement en rotation sont débrayés dudit écrou.

L'invention a également pour objet un procédé de vissage et de dévissage d'un écrou sur un élément de liaison, caractérisé en ce que:
- on visse sur l'extrémité filetée de l'élément de liaison un écrou comportant à sa périphérie une couronne dentée,
- on engage sur ladite extrémité filetée de l'élément de liaison, en vis-à-vis de l'écrou, un prolongateur comportant à sa périphérie une couronne dentée,
- on positionne au niveau de la couronne dentée du prolongateur un dispositif de vissage automatique,
- on embraye tangentiellement le dispositif de vissage sur la couronne dentée,
- on entraîne en rotation le prolongateur par le dispositif de vissage tout en l'accompagnant le long de son déplacement à une vitesse identique et sans interruption jusqu'à sa position désirée,
- on débraye le dispositif de vissage de la couronne dentée du prolongateur,
- on effectue une mise en tension de l'élément de vissage par l'intermédiaire du prolongateur,
- puis on effectue le vissage complémentaire de l'écrou par le dispositif de vissage en positionnant ledit dispositif au niveau de la couronne dentée dudit écrou,
- on relâche la mise en tension de l'écrou et,
- enfin, on effectue le dévissage du prolongateur par le même dispositif.

L'invention sera mieux comprise à l'aide de la description qui va suivre, donnée uniquement à titre d'exemple et faite en se référant aux dessins annexés, sur lesquels :
- La figure 1 est une vue de dessus d'un anneau de mise en tension des éléments de liaison et sur lequel se déplace le dispositif de vissage et de dévissage conforme à l'invention,
- la figure 2 est une vue en élévation de l'ensemble du dispositif selon l'invention,
- la figure 3 est une vue en perspective du dispositif selon l'invention,
- la figure 4 est une vue en coupe selon la ligne 4-4 de la figure 2.

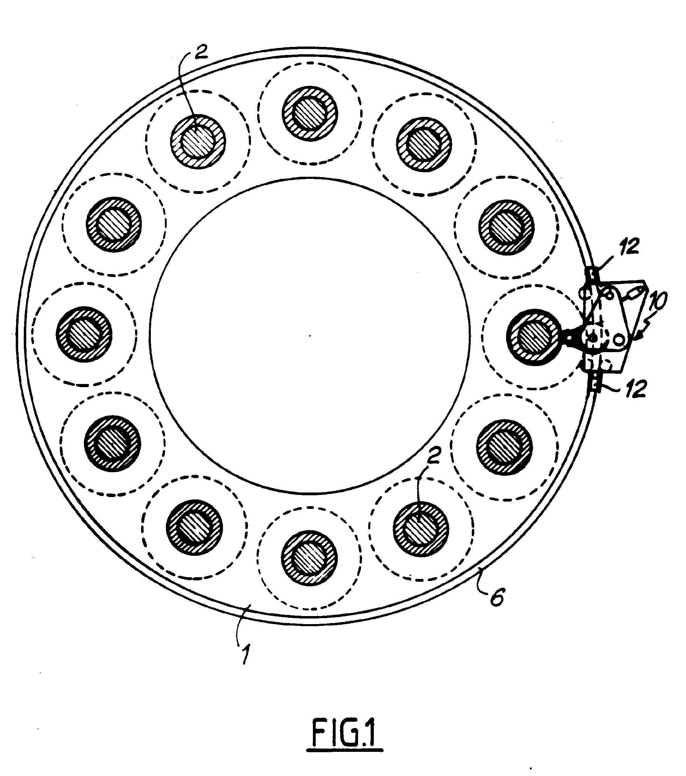

On a représenté sur la figure 1, un anneau 1 de mise en tension simultanée de plusieurs éléments de liaison 2 constitués par exemple par des goujons de grandes dimensions d'axe vertical.

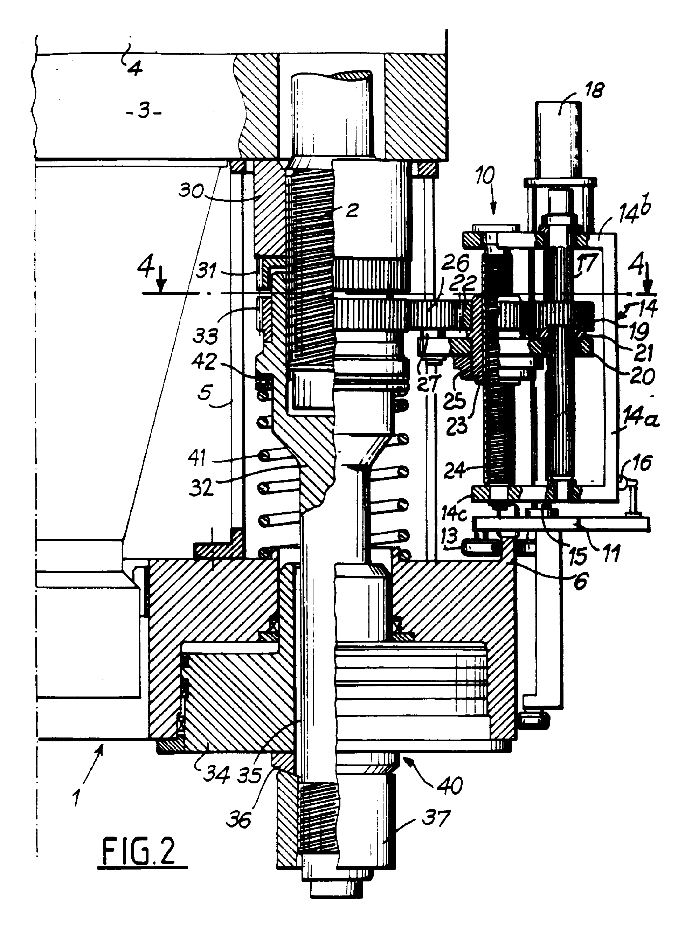

Ces éléments de liaison sont destinés à maintenir une bride 3 par exemple sur une bride fixe 4 d'une cuve ou d'une enveloppe sous pression (figure 2) à la périphérie de laquelle sont régulièrement répartis lesdits éléments de liaison 2.

La bride fixe 4 supporte la bride 3 par l'intermédiaire de moyens de liaison non représentés, constitués par exemple par des biellettes, et la bride 3 supporte elle-même un ensemble d'entretoises 5 et l'anneau 1, également par des moyens de liaison non représentés, constitués par exemple par des biellettes.

L'anneau 1 qui comporte sur sa périphérie un chemin de roulement 6 sur lequel se déplace le dispositif de vissage et de dévissage désigné dans son ensemble par la référence 10.

A cet effet, le dispositif de vissage et de dévissage 10 se compose d'un chariot 11 qui comporte des galets à axe horizontal 12 et des galets à axe vertical 13 qui se déplacent sur le chemin de roulement 6.

Le dispositif 10 comprend également un bâti 14 monté pivotant sur le chariot 11 par l'intermédiaire d'un axe vertical décalé 15. Pour cela, le bâti 14 est constitué d'une paroi verticale 14a munie à chacune de ses extrémités d'une joue horizontale respectivement 14b et 14c. L'axe de pivotement 15 traverse les joues 14b et 14c et son extrémité inférieure est en appui sur la face supérieure du chariot 11. Le pivotement du bâti 14 est commandé par exemple par un vérin 16 dont l'une extrémité est articulée sur la paroi verticale 14a du bâti 14 et dont l'autre extrémité est articulée sur le chariot 11. L'articulation utilise des moyens connus tels qu'une articulation en chape comportant une rotule sphérique, non représentée, pouvant ainsi supporter des oscillations dans toutes les directions.

Par ailleurs, le dispositif comporte un arbre cannelé 17 monté libre en rotation entre les joues 14b et 14c du bâti 14 et entraîné en rotation, soit dans le sens trigonométrique, soit l'inverse, par un moteur 18 fixé sur le bâti 14 à l'aide de moyens connus.

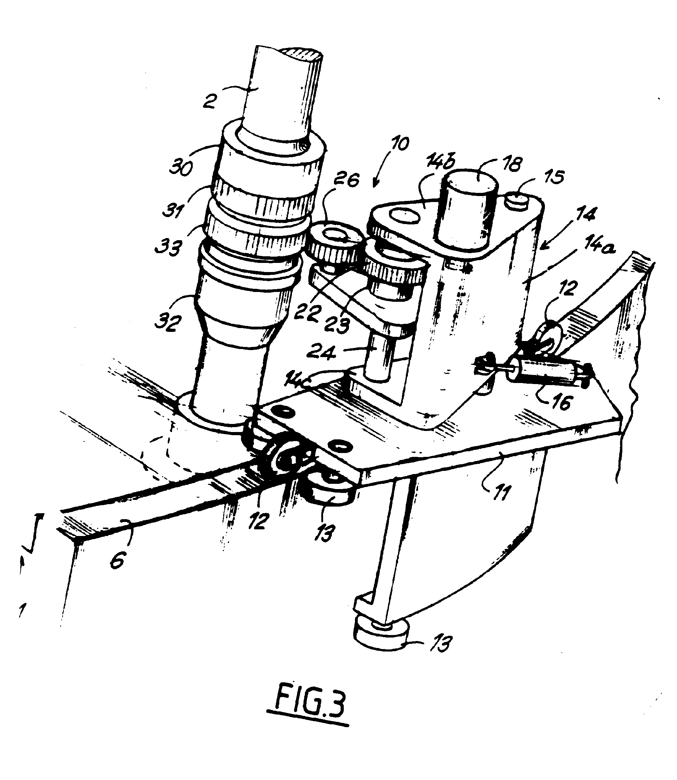

Comme cela apparaît sur les figures 2, 3 et 4, l'arbre cannelé 17 entraîne en rotation une roue menante 19 montée libre en rotation sur une platine 20 par l'intermédiaire d'une bague d'appui et de guidage 21 également montée sur l'arbre cannelé 17. Cette roue menante 19 engrène avec un pignon intermédiaire 22 qui est lui-même fixé par des vis, non représentées, ou tout autre moyen, sur un manchon 23 par exemple en bronze supporté par la platine 20.

Le manchon 23, dans lequel est ménagé axialement un taraudage débouchant, est monté sur une vis sans fin 24 libre en rotation autour de son axe entre les deux joues 14b et 14c du bâti 14. L'extrémité inférieure du manchon 23 débouche au-dessous de la platine 20 et est filetée de sorte à recevoir un contre-écrou 25 vissé pour permettre à l'ensemble pignon intermédiaire 22 et manchon 23 de tourner par rapport à la platine 20 mobile verticalement, comme on le verra ultérieurement.

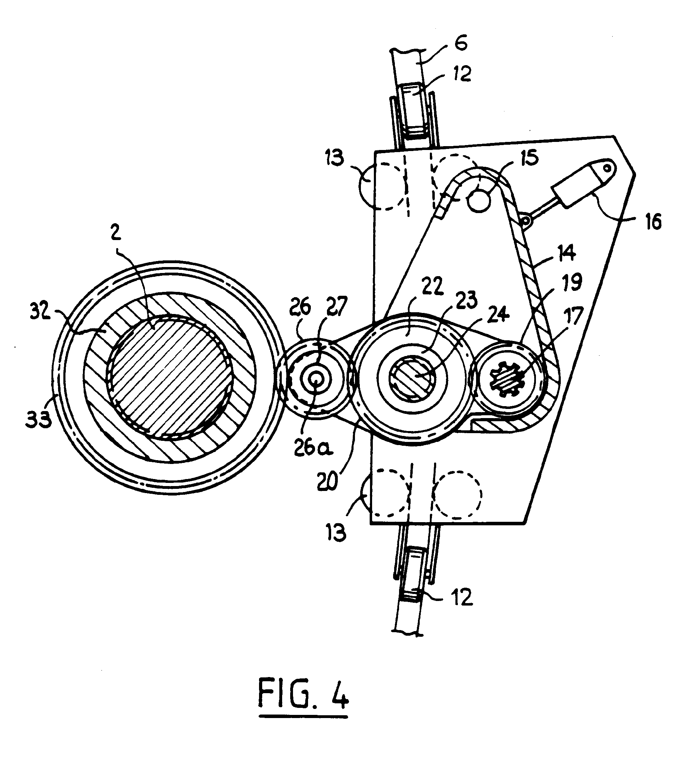

Le pignon intermédiaire 22 engrène avec une roue menée 26 montée libre en rotation sur la platine 20 par l'intermédiaire de son axe 26a (fig 4) logé dans une bague d'appui et de guidage 27, implantée à demeure dans l'épaisseur de la platine 20.

Sur l'extrémité filetée de l'élément de liaison 2 est vissé d'une part un écrou de serrage et de maintien 30 de la bride 3 sur la bride fixe 4 et d'autre part un prolongateur 32. L'écrou 30 et le prolongateur 32 sont équipés respectivement d'une couronne dentée 31 et 33, comportant chacune Z1 dents.

L'extrémité opposée du prolongateur 32 coopère avec le piston 34 d'un vérin 40 disposé dans l'anneau 1 pour assurer la mise en extension de l'élément de liaison 2 avant l'une ou l'autre des opérations soit de serrage, soit de désserrage de l'écrou 30.

Un ressort 41 est monté sur le prolongateur 32. L'une des extrémités de ce ressort repose sur une face d'appui fixe constituée par l'anneau 1, tandis que l'autre extrémité est en appui sur une butée à billes 42 qui est elle-même en appui sur une collerette du prolongateur 32. Ce ressort est un compensateur de poids, qui, au cours des opérations de vissage ou de dévissage, permet de maintenir le prolongateur 32 dans une position favorable par rapport à l'élément de vissage, évitant ainsi les risques de grippage et tout autre phénomène destructeur.

Chaque élément de liaison 2 est équipé de la sorte.

La roue menée 26 comporte Z2 dents et le pignon intermédiaire 22 comporte Z3 dents, Z3 étant inférieur à Z1 dents de la couronne 31. Le taraudage du manchon 23 a un filet dont l'hélice est de même sens que le filet de pas P1 de l'élément de liaison 2 et un pas :

$$P3 = P1 \times Z3/Z1.$$

Enfin, la vis sans fin 24 a également un pas P3.

Le fonctionnement du dispositif ainsi décrit est le suivant.

Après avoir vissé les éléments de liaison 2 sur la bride fixe 4 et placé la bride 3 sur ladite bride fixe 4, on visse sur l'extrémité filetée de chaque élément de liaison 2 un écrou 30. Ce vissage est effectué par exemple à l'aide d'une visseuse électrique ou pneumatique, non représentée, dont le couple est réglé à une valeur relativement faible permettant d'arrêter le vissage dès que l'écrou 30 vient au contact de la bride 3.

Une fois cette opération réalisée sur l'ensemble des éléments de liaison 2, on engage sur l'extrémité filetée de chacun desdits éléments de liaison, le prolongateur 32, puis on met en place l'anneau 1 qui est supporté par la bride 3 au moyen des entretoises 5. L'extrémité libre des prolongateurs 32 traverse avec jeu un alésage 35 prévu dans chaque piston 34. Le ressort 41 joue son rôle de compensateur de poids.

Ensuite, on visse complètement chaque prolongateur par le dispositif de vissage automatique 10.

Pour cela, on déplace le dispositif 10 sur le chemin de roulement pour le positionner à proximité du premier prolongateur 32 à visser.

Au départ, le bâti pivotant 14 est en position écartée et on positionne le train d'engrenages 19, 22, 26 en vis à vis de la couronne dentée 33 du prolongateur en mettant en marche le moteur 18 qui entraîne en rotation l'arbre cannelé 17, entraînant ainsi le train d'engrenages 19, 22, 26. Le pignon intermédiaire 22, solidaire du manchon 23, entraîne à son tour en rotation ledit manchon qui tourne donc sur la vis sans fin 24 provoquant le déplacement vertical de la platine 20 et du train d'engrenages 19, 22, 26. Lorsque ce train d'engrenages est en vis à vis de la couronne dentée 33, on arrête le moteur 18. Le vérin 16 approche le bâti 14 qui pivote autour de l'axe vertical 15, jusqu'à ce que la roue 26 vienne s'engrener sur la couronne dentée 33 du prolongateur 32. Pour faciliter l'engrenage des dents, le moteur 18 est remis en marche au moment où s'opère l'accostage. Ce moteur entraîne en rotation l'arbre cannelé 17 et la roue dentée 19, laquelle transmet ce mouvement aux roues suivantes 22 et 26. L'arbre cannelé 17 assure le guidage vertical de la platine 20.

Le prolongateur 32 commence à se visser et se déplace donc verticalement, à la vitesse d'un pas par tour. Comme les pas des filetages sur l'élément de liaison 2 et sur la vis sans fin 24 sont proportionnels au nombre de dents des roues homologues 19, 22, 26, le manchon 23 se déplace sur la vis sans fin 24 à la même vitesse que le prolongateur 32 sur l'élément de liaison 2.

Une fois le vissage du prolongateur 32 effectué, on arrête le moteur 18 et on écarte le bâti 14 qui pivote autour de l'axe 15 sous l'action du vérin 16.

Ensuite, on renouvelle l'opération sur chaque prolongateur en déplaçant le dispositif 10 sur le chemin de roulement 6.

Lorsque l'ensemble des prolongateurs est vissé, on introduit sur l'extrémité libre de chaque prolongateur une rondelle 36 et on visse un écrou 37.

Le contact de la rondelle 36 avec l'écrou 37 est réalisé par l'association de surfaces coniques, l'une concave l'autre convexe, ce qui permet de s'adapter aux tolérances de fabrication et aux désalignements possibles en exploitation.

Ensuite, on alimente en fluide moteur simultanément l'ensemble des vérins 40 par un système approprié, non représenté, de façon à exercer une traction et une mise en tension de l'ensemble des éléments de liaison 2 par l'intermédiaire des rondelles 36 et des écrous 37.

Tout en maintenant l'ensemble des éléments de liaison 2 en extension, on complète le vissage des écrous de serrage 30 en amenant le dispositif de vissage en vis à vis de chaque couronne dentée 31 desdits écrous 30 et en réalisant les mêmes opérations que pour le vissage des prolongateurs 32.

Au cours des opérations de vissage ou de dévissage, les forces tangentielles exercées au contact de la roue 26 et de la couronne dentée de l'écrou ou du prolongateur ont tendance à faire pivoter le bâti 14 autour de l'axe 15. Pour éviter cela, le vérin 16 maintient le bâti 14 en position.

Le dévissage des prolongateurs 32 et des écrous de serrage 30 s'effectue de manière identique en réalisant les opérations en sens inverse.

Le dispositif, selon l'invention, permet donc d'effectuer automatiquement les opérations de vissage et de dévissage d'une série d'écrous disposés selon un même axe vertical commun, tout en l'accompagnant le long de son déplacement. On obtient de la sorte une surface de contact entre les dents menantes et les dents menées constante durant toute l'opération.

De plus, il permet également d'appliquer un couple de manoeuvres constant pendant toute la durée de l'opération, évitant ainsi la création de forces parasites pouvant provoquer un échauffement des surfaces en contact et une flexion de la partie libre de l'élément de liaison.

Les dispositifs suivant l'invention s'appliquent notamment aux cuves, enveloppes sous pression, trous d'homme, trous de poing, turbines, vannes hydrauliques, pour la fixation d'un élément d'obturation dans les installations telles que nucléaires, pétrochimiques ou chimiques et également dans l'industrie automobile et aéronautique. De façon générale, le dispositif s'applique dans le cadre de nombreuses installations industrielles mettant en oeuvre des éléments de liaison vissés.

**Revendications**

1. Dispositif de vissage et de dévissage sur un élément de liaison (2) notamment un goujon, d'au moins deux écrous (30, 32) disposés sur un même axe, caractérisé en ce qu'il comprend un bâti (14) pivotant autour d'un axe (15) parallèle à l'élément de liaison (2) et supportant des moyens (17, 19, 22, 26) d'entraînement en rotation tangentiellement et successivement de chaque écrou (30, 32) à visser ou à dévisser et des moyens (20, 24) de déplacement desdits moyens d'entraînement en rotation suivant un axe parallèle à l'axe de l'élément de liaison (2) et à une vitesse identique à celle de chaque écrou en mouvement au cours de son vissage ou de son dévissage.

2. Dispositif selon la revendication 1, caractérisé en ce que le bâti (14) pivote, sous l'action d'un organe de commande (16), entre une première position dans laquelle les moyens (17, 19, 22, 26) d'entraînement en rotation sont embrayés tangentiellement sur l'écrou (30-32) à visser ou à dévisser et une seconde position dans laquelle lesdits moyens d'entraînement en rotation sont débrayés dudit écrou.

3. Dispositif selon les revendications 1 et 2, caractérisé en ce que les moyens d'entraînement en rotation sont constitués par un train d'engrenages (19, 22, 26) entraîné par un arbre cannelé (17) parallèle à l'axe de pivotement du bâti (14).

4. Dispositif selon l'une des revendications 1 à 3, caractérisé en ce que les moyens de déplacement du train d'engrenages (19, 22, 26) sont constitués par une platine (20) supportant ledit train d'engrenages et mobile sur une vis sans fin (24) parallèle à l'axe de pivotement du bâti (14) et par l'arbre cannelé (17).

5. Dispositif selon l'une des revendications précédentes, caractérisé en ce que le train d'engrenages comporte un roue menante (19) solidaire en rotation avec l'arbre cannelé (17) entraînée par un moteur (18), un pignon intermédiaire (22) solidaire en rotation avec un manchon (23) coopérant avec la vis sans fin (24), et monté libre en rotation sur la platine (20), et une roue menée (26) montée libre en rotation sur ladite platine (20).

6. Dispositif selon la revendication 5, caractérisé en ce que le manchon (23) comporte un taraudage coopérant avec la vis sans fin (24) et dont le filet et le pas sont identiques au filet et au pas de l'élément de liaison (2).

7. Dispositif selon l'une quelconque des revendications précédentes, caractérisé en ce que les pas des filetages de l'élément de liaison (2) et de la vis sans fin (24) sont proportionnels au nombre de dents des roues (19, 22, 26) du train d'engrenages.

8. Procédé de vissage et de dévissage sur un élément de liaison d'au moins deux écrous disposés sur un même axe, caractérisé en ce que :
   – on visse sur l'extrémité filetée de l'élément de liaison (2) un premier écrou (30) comportant à sa périphérie une couronne dentée (31),
   – on engage sur ladite extrémité filetée de l'élément de liaison (2), en vis-à-vis de l'écrou (30), un prolongateur (32) formant un deuxième écrou et comportant à sa périphérie une couronne dentée (33),
   – on positionne au niveau de la couronne dentée (33) du prolongateur (32) un dispositif de vissage automatique (10),
   – on embraye tangentiellement le dispositif de vissage (10) sur la couronne dentée (33),
   – on entraîne en rotation le prolongateur (32) par le dispositif de vissage (10) tout en l'accompagnant le long de son déplacement à une vitesse identique et sans interruption jusqu'à sa position désirée,
   – on débraye le dispositif de vissage (10) de la couronne dentée (33) du prolongateur (32),
   – on effectue une mise en tension de l'élément de vissage (2) par l'intermédiaire du prolongateur (32),
   – puis on effectue le vissage complémentaire dudit premier écrou (30) par le dispositif de vissage (10) en positionnant ledit dispositif au niveau de la couronne dentée (33) dudit écrou (30), tout en l'accompagnant le long de son déplacement à une vitesse identique et sans interruption jusqu'à sa position désirée,
   – on relâche la mise en tension de l'écrou (30) et,
   – enfin, on effectue le dévissage du prolongateur (32) par le même dispositif (10).

9. Procédé selon la revendication 8, caractérisé en ce qu'on utilise un dispositif de vissage ou de dévissage (10) tel que revendiqué dans les revendications 1 à 7.

**Claims**

1. Device for screwing and unscrewing at least two nuts arranged on the same axis on a coupling member, notably a bolt (2), characterised in that it comprises a framework (14) which pivots around a shaft (15) parallel to the coupling member (2) and supports means (17,19,22, 26) for causing successive tangential rotation of each nut (30,32) to be screwed or unscrewed and means (20,24) for moving the said rotating means along an axis parallel to the axis of the coupling member (2) and at a speed identical with that of the nut in motion while it is being screwed or unscrewed.

2. Device according to claim 1, characterised in that the framework (14) pivots, when actuated by a control device (16), between a first position in which the rotating means (17,19,22,26) engage tangentially with the nut (30-32) to be screwed or unscrewed, and a second position in which the said rotating means are disengaged from the said nut.

3. Device according to claims 1 and 2, characterised in that the rotating means consist of a gear train (19, 22,26) driven by a splined shaft (17) parallel to the pivot axis of the framework (14).

4. Device according to one of claims 1 to 3, characterised in that the means for moving the gear train (19,22,26) consist of a plate (20) supporting the said gear train and movable on an endless screw (24) parallel to the pivot axis of the framework (14), and of the splined shaft (17).

5. Device according to one of the preceding claims, characterised in that the gear train comprises a driving wheel (19) integral in rotation with the splined shaft (17) and driven by a motor (18), an intermediate pinion (22) integral in rotation with a sleeve (23) interacting with the endless screw (24), and mounted to be freely rotatable on the plate (20), and a driven wheel (26) mounted to be freely rotatable on the said plate (20).

6. Device according to claim 5, characterised in that the sleeve (23) comprises a screw thread interacting with the endless screw (24) and whose thread and pitch are identical with the thread and pitch of the coupling member (2).

7. Device according to any of the preceding claims, characterised in that the pitches of the thread of the coupling member (2) and of the endless screw (24) are proportional to the number of teeth on the wheels (19, 22,26) of the gear train.

8. Process for screwing and unscrewing at least two nuts arranged on the same axis on a coupling member, characterised in that:

– a first nut (30) comprising a toothed rim (31) on its periphery is screwed onto the threaded end of the coupling member (2),

– an extender (32) forming a second nut and comprising a toothed rim (33) at its periphery is engaged onto the said threaded end of the coupling member (2), facing the nut (30),

– an automatic screwing device (10) is positioned level with the toothed rim (33) of the extender (32),

– the screwing device (10) is engaged tangentially onto the toothed rim (33),

– the extender (32) is driven in rotation by means of the screwing device (10) whilst accompanying it through its travel at an identical speed and without interruption till it reaches its desired position,

– the screwing device (10) is disengaged from the toothed rim (33) of the extender (32),

– the screwing member (2) is tensioned by means of the extender (32),

– the final tightening of the nut is then performed by means of the screwing device (10) by positioning the said device level with the toothed rim (33) of the said nut (30), whilst accompanying it through its travel at an identical speed and without interruption till it reaches its desired position,

– the tensioning of the nut (30) is released, and

– lastly, the extender (32) is unscrewed.

9. Process according to claim 8, characterised in that a screwing or unscrewing device (10) as claimed in claims 1 to 7 is used.

**Patentansprüche**

1. Vorrichtung zum Schrauben und Losschrauben auf einem Verbindungselement (2), insbesondere einer Stiftschraube, von wenigstens zwei Muttern (30, 32), die auf einer selben Achse angeordnet sind, dadurch gekennzeichnet, daß sie ein Gestell (14) aufweist, das um eine Achse (15) parallel zum Verbindungselement (2) schwenkt und Drehantriebseinrichtungen (17, 19, 22, 26) trägt, die tangential und aufeinanderfolgend jede Mutter (30, 32) Schrauben oder Losschrauben, und Einrichtungen (20, 24) aufweisen zum Bewegen der Drehantriebseinrichtungen gemäß einer Achse parallel zur Achse des Verbindungselements (2) und bei einer Geschwindigkeit, die identisch ist zu jener einer jeden Mutter in Bewegung während ihrem Schrauben oder ihrem Losschrauben.

2. Vorrichtung nach Anspruch 1, dadurch gekennzeichnet, daß das Gestell (14) unter der Betätigung eines Steuerorgans (16) zwischen einer ersten Stellung, in der die Drehantriebseinrichtungen (17, 19, 22, 26) tangentiell an der Mutter (30-32) angreifen, um zu Schrauben oder Loszuschrauben, und einer zweiten Stellung schwenkt, in der die Drehantriebseinrichtungen von der Mutter abgerückt sind.

3. Vorrichtung nach Anspruch 1 oder 2, dadurch gekennzeichnet, daß die Drehantriebseinrichtungen aus einem Getriebezug (19, 22, 26) gebildet werden, der durch eine Keilwelle (17) angetrieben wird, die parallel zur Schwenkachse des Gestells (14) verläuft.

4. Vorrichtung nach einem der Ansprüche 1 bis 3, dadurch gekennzeichnet, daß die Bewegungseinrichtungen des Getriebezugs (19, 22, 26) aus einer Platte (20) gebildet sind, die den Getriebezug abstützt und auf einer Endlosspindel oder Endlosschraube (24) bewegbar ist, die parallel zur Schwenkachse des Gestells (14) angeordnet ist, und durch die Keilwelle (17) bewegbar ist.

5. Vorrichtung nach einem der vorhergehenden Ansprüche, dadurch gekennzeichnet, daß der Getriebezug ein Antriebsrad (19) aufweist, das drehverbunden ist mit der Keilwelle (17), das durch einen Motor (18) angetrieben ist, wobei ein Zwischenritzel (22), das drehbeweglich mit einer Muffe (23) ist, mit der Endlosschraube (24) zusammenwirkt und frei drehbeweglich auf der Plätte (20) angeordnet ist, und ein angetriebenes Rad (26) aufweist, das frei drehbeweglich auf der Platte (20) angeordnet ist.

6. Vorrichtung nach Anspruch 5, dadurch gekennzeichnet, daß die Muffe (23) ein Gewinde aufweist, das mit der Endlosschraube (24) zusammenwirkt, und dessen Gewinde und Steigung identisch sind mit dem Gewinde und mit der Steigung des Verbindungselements (2).

7. Vorrichtung nach einem der vorhergehenden Ansprüche, dadurch gekennzeichnet, daß die Gewindesteigungen des Verbindungselementes (2) und der Endlosschraube (24) proportional sind zur Anzahl der Zähne der Räder (19, 22, 26) des Getriebezugs.

8. Verfahren zum Schrauben und Losschrauben auf einem verbindungselement von wenigstens zwei Muttern, die auf derselben Achse angeordnet sind, dadurch gekennzeichnet, daß:

– auf das Gewindeende des Verbindungselements (2) eine erste Mutter (30) aufgeschraubt wird, die an ihrem Umfang einen Zahnkranz (31) aufweist,

– auf das Gewindeende des Verbindungselements (2) gegenüber der Mutter (30) ein Verlängerungsstück (32) in Eingriff gebracht wird, das eine zweite Mutter bildet und an seinem Umfang einen Zahnkranz (33) aufweist,

– auf der Höhe des Zahnkranzes (33) des Verlängerungsstücks (32) eine automatische Schraubvorrichtung (10) angebracht wird,

– tangentiell die Schraubvorrichtung (10) mit dem Zahnkranz (33) in Eingriff gebracht wird,

– das Verlängerungsstück (32) durch die Schraubvorrichtung (10) in Drehung versetzt wird, wobei es entlang seiner Verschiebung mit einer identischen Geschwindigkeit und ohne, Unterbrechung bis zur gewünschten Stellung begleitet wird,

– die Schraubvorrichtung (10) von dem Zahnkranz (33) des Verlängerungsstückes (32) außer Eingriff gebracht wird,

– ein Unterspannungsetzen des Schraubelements (2) mittels des Verlängerungsstücks (32) erzeugt wird,

– sodann das komplementäre Schrauben der ersten Mutter (30) durch die Schraubvorrichtung (10) erzeugt wird unter Positionieren der Vorrichtung auf der Höhe des Zahnkranzes (33) der Mutter (30), wobei diese entlang ihrer Verschiebung mit einer identischen Geschwindigkeit und ohne Unterbrechung bis zu ihrer gewünschten Position begleitet wird,

– das Unterpannungsetzen der Mutter (30) gelöst wird, und

– schließlich das Losschrauben des Verlängerungsstücks (32) durch dieselbe Vorrichtung (10) durchgeführt wird.

9. Verfahren nach Anspruch 8, dadurch gekennzeichnet, daß eine Vorrichtung zum Schrauben oder Losschrauben (10), wie in den Ansprüchen 1 bis 7 beansprucht, verwendet wird.

# FIG.1

FIG.2

FIG.3

FIG. 4